# EUROPÄISCHE PATENTSCHRIFT

(11) **EP 1 860 830 B1**
(45) Veröffentlichungstag und Bekanntmachung des Hinweises auf die Patenterteilung: **01.07.2009**
(21) Anmeldenummer: 07000952.7
(22) Anmeldetag: 18.01.2007
(51) Int. Cl.: H04L 12/44, H04L 12/56, H04L 12/28

(54) **Verfahren zur Installation eines hierarchischen Netzwerkes**
Method for installing a hierarchical network
Procédé d'installation d'un réseau hiérarchique

(30) Priorität: 24.05.2006 DE 102006024336
(43) Veröffentlichungstag der Anmeldung: 28.11.2007
(73) Patentinhaber: Ista International GmbH, 45131 Essen (DE)
(72) Erfinder: Gronauer, Manfred, 97084 Würzburg (DE); Altan, Nicola, 45899 Gelsenkirchen (DE)
(74) Vertreter: COHAUSZ DAWIDOWICZ HANNIG & SOZIEN

(56) Entgegenhaltungen:
- WO-A-03/061176
- US-A1- 2005 152 305
- US-B1- 7 020 701

## Beschreibung

Die Erfindung betrifft ein Verfahren zur Installation eines hierarchischen Netzwerkes mit mehreren Sensorknoten, welche Sensormesswerte direkt oder indirekt über Sensorknoten an einen zentralen Netzknoten kommunizieren, bei dem nacheinander Sensorknoten in Betrieb genommen werden, wobei ein Sensorknoten bei Inbetriebnahme eine anfängliche hierarchische Ebene aufweist, insbesondere diese Ebene zugeordnet wird und, wobei ein Sensorknoten bei Inbetriebnahme Synchronisations-Informationen gespeichert hat, um zumindest mit einigen, insbesondere mit allen in dessen Empfangsgebiet befindlichen und insbesondere zuvor in Betrieb genommenen Sensorknoten kommunizieren zu können, wobei wenigstens ein Sensorknoten zumindest temporär einen zentralen Netzknoten bildet, insbesondere der/die mit der niedrigsten hierarchischen Ebene, wobei bei einer Kommunikation zwischen zwei Sensorknoten oder einem Sensorknoten und einem zentralen Netzknoten ein Synchronisationstelegramm ausgesendet wird, mit welchem die hierarchische Ebene des sendenden Knotens an den empfangenden Knoten mitgeteilt wird.

Ein derartiges Verfahren ist z.B. aus dem Dokument US 7,020,701 B1 bekannt.

Hierarchische Netzwerke mit mehreren Sensorknoten sind beispielsweise bekannt im Bereich der Heizkostenerfassung. Die Erfindung ist jedoch nicht auf diese Anwendung beschränkt.

Bekannt ist es beispielsweise, dass in einer Liegenschaft mehrere Nutzeinheiten, d.h. beispielsweise Wohnungen, existieren, in denen üblicherweise in einem Raum wenigstens ein Heizkörper angeordnet ist, an welchem üblicherweise wiederum ein so genannter Heizkostenverteiler angeordnet ist. Ein solcher Heizkostenverteiler kann durch einen Sensorknoten gebildet sein, das bedeutet, es handelt sich bei einem solchen Sensorknoten um ein Gerät mit einem Sensor für eine Messwerterfassung, in diesem Beispiel für die Erfassung abgegebener Wärmemengen an einem Heizkörper, wobei ein solcher Sensorknoten weiterhin in ein Netzwerk, nämlich üblicherweise in ein hierarchisch organisiertes Netzwerk eingebunden ist, in welchem der Sensorknoten gegebenenfalls indirekt über andere Sensorknoten oder aber auch direkt mit einem zentralen Netzknoten kommunizieren kann, um die erfassten Verbrauchswerte bzw. allgemein Sensormesswerte an diesen zentralen Netzknoten zu übertragen.

In einem solchen zentralen Netzknoten, der auch durch einen Sensorknoten des Netzwerkes gebildet sein kann, werden die Messwerte jedes einzelnen Sensorknotens erfasst, gespeichert und für eine spätere Auslesung bereitgestellt.

Die Kommunikation der einzelnen Sensorknoten untereinander erfolgt in einem hierarchischen Netz üblicherweise funkgebunden, wobei zur Einsparung von Sende- und Empfangsenergie in den jeweiligen Sensorknoten für die Durchführung einer Kommunikation interne Uhrsysteme vorgesehen sind und den Sensorknoten bekannt ist, wann ein Sensorknoten seine Daten senden und wann ein anderer die Daten empfangen kann.

Um eine Kommunikation für den Austausch von Daten stattfinden zu lassen, ist es dabei beispielsweise bekannt, dass ein Sensorknoten vor der Übermittlung der Daten zunächst ein so genanntes Synchronisationstelegramm aussendet, um eine Kommunikation einzuleiten, wobei ein solches Synchronisationstelegramm von einem anderen Sensorknoten in der Empfangsumgebung des sendenden Sensorknotens empfangen werden kann, wenn dieser zum richtigen Zeitpunkt ein Empfangsfenster hierfür geöffnet hat. Wird das Sensortelegramm empfangen, so kann der Empfang quittiert und nachfolgend innerhalb einer Kommunikation der Datenaustausch stattfinden.

Auf diese Art und Weise können die Daten eines Sensorknotens von einem, insbesondere dem die Daten erfassenden Sensorknoten, gegebenenfalls über andere Sensorknoten hinweg, die als Relais bzw. Repeaterstationen fungieren, zu dem zentralen Netzknoten durch das hierarchische Netz weiter propagiert werden.

Hierbei ist es in einer hierarchischen Netztopologie in bevorzugter Ausführung vorgesehen, dass alle Sensorknoten identisch sind (ggfs. mit Ausnahme des zentralen Sensorknotens) und dass ein Sensorknoten eine bestimmte Ebene aufweist, durch welche der Abstand zu einem zentralen Netzknoten angegeben ist. Hierbei wird ein Sensorknoten einer bestimmten Ebenenstufe innerhalb dieses hierarchischen Netzes bevorzugt mit solchen Sensorknoten kommunizieren, die in der Hierarchie nur eine Ebene oberhalb/unterhalb des anderen Sensorknotens angeordnet sind. Wird somit bei jeder erfolgten Kommunikation eine Ebenenstufe bei der Weiterleitung der Daten überschritten und gibt es zwischen kommunizierenden Sensorknoten keine Ebenensprünge größer als 1, kann sichergestellt werden, dass der Transportweg der Daten von dem erfassenden Sensorknoten bis zum zentralen Netzknoten minimiert wird. Hierdurch wird zum einen Kommunikationszeit sowie auch die hierfür benötigte Energie minimiert.

Um ein derartiges Netz aufzubauen, ist es beispielsweise bekannt, jedem Sensorknoten eine bestimmte Ebene zuzuweisen, so dass die Kommunikationswege der einzelnen Sensorknoten untereinander beispielsweise initial bei der Installation des Netzwerkes vorgegeben sein können. Ein derart fest und unflexibel eingerichtetes Netz kann jedoch nicht oder nur schwerlich auf sich ändernde Situationen reagieren, beispielsweise wenn sich Empfangsbedingungen ändern, z.B. dadurch, dass ein Sensorknoten nach Umstellen eines Möbelstückes oder nach anderen Maßnahmen, welche die Empfangsqualität beeinflussen, nicht mehr einen optimalen Empfang zu dem ursprünglich eingerichteten anderen Sensorknoten aufweist. Auch muss ein solches Netz vor der Installation bis ins Detail geplant sein, da es sich nicht selbst organisieren kann.

Aufgabe der Erfindung ist es daher, ein Verfahren zur Installation eines hierarchisch organisierten Netzes mit einer Vielzahl von Sensorknoten bereit zu stellen, mit dem im Wesentlichen automatisch eine optimale hierarchische Organisation des Netzwerkes selbsttätig und automatisch erfolgt, insbesondere wobei weiterhin das aufgebaute Netzwerk in der Lage ist, bei sich ändernden Empfangsbedingungen seine Kommunikationswege selbsttätig zu ändern.

Hierbei ist es weiterhin Aufgabe der Erfindung, zu vermeiden, dass bei der Installation einer Vielzahl von Sensorknoten eine Inselbildung stattfindet, d.h. dass sich Gruppen von Sensorknoten bilden, in denen die Sensorknoten zwar untereinander kommunizieren können, jedoch eine Weiterleitung zu einem zentralen Netzknoten aufgrund eines Abrisses von Kommunikationswegen zu benachbarten Sensorknoten nicht mehr möglich ist.

Diese Aufgabe wird gemäß dem vorgeschlagenen Verfahren dadurch gelöst, dass zur Installation eines hierarchischen Netzwerkes mit mehreren Sensorknoten diese Sensorknoten bzw. zumindest eine Teilanzahl der später gesamt vorgesehenen Sensorknoten nacheinander in Betrieb genommen werden, wobei ein Sensorknoten bei Inbetriebnahme eine anfängliche, insbesondere beliebige hierarchische Ebene aufweist, insbesondere ungleich der Ebene NULL und wobei ein Sensorknoten bei Inbetriebnahme Synchronisationsinformationen gespeichert hat, um zumindest mit einigen, insbesondere mit allen, in dessen Empfangsgebiet befindlichen und insbesondere zuvor in Betrieb genommenen Sensorknoten kommunizieren zu können, wobei wenigstens ein Sensorknoten zumindest temporär einen zentralen Netzknoten bildet, insbesondere der/die mit der niedrigsten hierarchischen Ebene (z.B. Ebene NULL) wobei weiterhin bei einer Kommunikation zwischen zwei Sensorknoten oder einem Sensorknoten und einem zentralen Netzknoten ein Synchronisationstelegramm ausgesendet wird, mit welchem die hierarchische Ebene des sendenden Knotens an den empfangenden Knoten mitgeteilt wird und dass bei oder nach einer Kommunikation einer der Sensorknoten seine hierarchische Ebene ändert in Abhängigkeit der hierarchischen Ebene des anderen Sensorknotens, wobei das Durchführen der Änderung wenigstens abhängig ist von einer Eigenschaft der Kommunikation.

Das vorgenannte erfindungsgemäße Verfahren weist einige wesentliche Vorteile auf. Das Netz wird durch Nacheinander-Inbetriebnahme mehrerer Sensorknoten installiert, so dass mit fortschreitender Zeit immer mehr Sensorknoten das installierte Netz bilden. Hierbei weist, um eine anfängliche Funktion des installierten Netzes sicherzustellen, ein Sensorknoten eine anfängliche hierarchische Ebene auf, die z.B. bei der Herstellung oder erst bei der Installation bzw. der Inbetriebnahme zugeordnet werden kann. Diese Ebene muss nicht und wird allgemein auch nicht der späteren tatsächlichen hierarchischen Ebene entsprechen, die ein Sensorknoten aufweist, wenn das Netz nach der erfolgreichen Installation stabil läuft, insbesondere konvergiert ist. Die anfängliche hierarchische Ebene dient lediglich dazu, eine Startphase mit einer Kommunikation der installierten Sensorknoten untereinander zu ermöglichen.

Wesentlich für die Inbetriebnahme ist es, dass ein Sensorknoten, der in Betrieb genommen wird, Synchronisationsinformationen gespeichert hat, damit dieser in Betrieb genommene Sensorknoten mit anderen Sensorknoten kommunizieren kann, die bereits zuvor in Betrieb genommen wurden. Hier wird maßgeblich auf das eingangs beschriebene Verfahren der Kommunikation zwischen Sensorknoten zurückgegriffen, bei dem ein Sensorknoten zwecks Initiierung eines Datenaustauschs ein so genanntes Synchronisationstelegramm aussendet, welches von anderen Sensorknoten in der Umgebung empfangen werden kann. Hierbei erfolgt der Empfang im Wesentlichen jedoch nur von einem solchen Sensorknoten, der rechtzeitig zur Absendezeit des Synchronisationstelegramms ein Empfangsfenster öffnet, dem also eine Information darüber vorliegt, wann ein anderer Sensorknoten ein solches Synchronisationstelegramm absendet. Synchronisationsinformationen umfassen somit wenigstens Informationen über die Zeiten des Aussendens und Empfangens von Synchronisationstelegrammen, die kommunikationseinleitend sind.

Gemäß der Erfindung kann es dabei vorgesehen sein, dass einem Sensorknoten die nötige Synchronisationsinformation bei der Inbetriebnahme oder auch vorher mitgeteilt wird, z.B. durch drahtloses Überspielen oder dadurch dass ein in Betrieb genommener Sensorknoten diese Information selbsttätig erlernt, z.B. dadurch dass ein Knoten sein Empfangsfenster wenigstens für die Dauer der Periode zwischen zwei Synchronisationstelegrammen anderer Knoten öffnet und selbst auch periodisch Synchronisationstelegramme sendet. Hierbei ist es vorteilhaft, wenn die Periode für alle Sensorknoten identisch ist. So ist sichergestellt, dass während dieser Dauer Synchronisationstelegramme von allen anderen Sensorknoten empfangen werden können, die im Empfangsbereich des betreffenden Sensorknotens liegen. Die Zeitpunkte des Eintreffens von Synchronisationstelegrammen anderer Sensorknoten können dann von dem neuen Sensorknoten gelernt, d.h. gespeichert werden, so dass dieser nach der Lernphase sein Empfangsfenster nur noch dann öffnet, wenn ein Synchronisationstelegramm eines anderen Sensorknotens erwartet wird. Da der betreffende Sensorknoten selbst auch Synchronisationstelegramme sendet können dessen Sendezeiten wiederum von anderen Sensorknoten gelernt werden.

So wird beispielsweise bei der Installation des Netzes zunächst ein erster Sensorknoten in Betrieb genommen, dem eine Synchronisationsinformation zur Verfügung steht (z.B. übermittelt oder ursprünglich gespeichert) , die im Wesentlichen besagt, wann, d.h. zu welchen Zeiten bzw. mit welcher Periodizität dieser ein Synchronisationstelegramm zwecks Verbindungsaufbau mit anderen Sensorknoten aussenden soll. Dies kann für diesen und auch alle anderen Sensorknoten z.B. einmal oder mehrmals am Tag sein, ggfs. während der reinen Installationsphase auch öfter, z.B. mehrfach pro Stunde.

Da noch keine anderen Sensorknoten zu diesem Zeitpunkt installiert sind, kann es sich hierbei um die einzige Synchronisationsinformation handeln, die dieser Sensorknoten erhält. Gegebenenfalls kann diesem ersten Sensorknoten jedoch auch schon mitgeteilt werden oder mitgeteilt worden sein, zu welchen Zeitpunkten andere, noch später zu installierende Sensorknoten entsprechende Telegramme aussenden, so dass dieser erstinstallierte Sensorknoten ebenfalls eine Information darüber hat, wann dieser ein Empfangsfenster zu öffnen hat. Gemäß vorgenannter Ausführung kann der erste Sensorknoten auch selbst die Zeiten anderer Sensorknoten erlernen.

Bei einem zweiten zu installierenden Sensorknoten wird als Synchronisationsinformation in einer möglichen Ausführung wiederum diejenige Synchronisations-Information an den Sensorknoten übermittelt, wann zum einen dieser zweite Sensorknoten Synchronisationstelegramme zu senden hat und zum anderen auch, wann dieser Empfangsfenster zu öffnen hat, um Synchronisationstelegramme von anderen, in diesem initialen Fall zumindest von dem ersten zuvor installierten Sensorknoten, empfangen kann. Diese Information kann auch bereits initial im Sensorknoten zumindest zum Teil vorhanden sein oder wie erwähnt auch angelernt werden.

Es wird somit an diesem zweiten Sensorknoten, sofern dieser sich im Empfangsgebiet des zuvor befindlichen Sensorknotens befindet, eine entsprechende Synchronisationsinformation über den Zeitpunkt der Empfangsfensteröffnung bereitgestellt.

Auf diese Art und Weise erfolgt der weitere Aufbau des Sensornetzwerkes durch Nacheinanderinstallation von Sensorknoten, wobei dem jeweils immer zuletzt installierten Sensorknoten Synchronisationsinformationen übermittelt werden, oder dieser die Informationen selbst lernt, um zumindest mit einigen (z.B. einer Auswahl nach einem vorgegebenen Kriterium), insbesondere mit allen zuvor und in dessen Empfangsgebiet befindlichen anderen Sensorknoten kommunizieren zu können, wie es zuvor beschrieben wurde.

Da weiterhin bei dieser Installation jeder Sensorknoten eine anfängliche Hierarchieebene aufweist, z.B. durch Zuordnung, ergibt sich somit ein hierarchisches Netz, welches genügend Anfangsbedingungen zur Verfügung gestellt bekommen hat, um eine Kommunikation zwischen den einzelnen Sensorknoten stattfinden lassen zu können, wobei bei einer bevorzugten Netztopologie der Datentransfer von Sensorknoten einer bestimmten Ebene in Richtung von Sensorknoten mit geringerer Ebene erfolgt bis der zentrale Netzknoten mit der Ebene NULL erreicht ist. Selbstverständlich kann die Netztopologie auch genau umgekehrt ausgeführt sein, oder ein Netz startet nicht mit der Ebene NULL, sondern z.B. mit der Ebene EINS oder einer anderen niedrigsten oder analog höchsten Ebene. Das weiterhin beschriebene Verfahren gilt somit analog auch für diese Fälle.

Gemäß dem Verfahren kann wenigstens ein Sensorknoten zumindest temporär, d.h. gegebenenfalls nur für den Installationszeitraum, als zentraler Netzknoten definiert werden, wobei je nach Art der hierarchischen Organisation dieser eine bestimmte hierarchische Ebene aufweist, z.B. durch Zuordnung. Bei der üblicherweise bevorzugt vorgegebenen Baumstruktur, ausgehend mit einem einzigen zentralen Netzknoten einer nur singulär vergebenen Ebene wird dieser Netzknoten somit in besonders bevorzugter Ausführung die niedrigste hierarchische Ebene, d.h. in diesem Beispiel die Ebene 0 aufweisen, sofern es sich bei dieser um die geringste handelt. Die Inbetriebnahme eines solchen zentralen Netzknoten mit der geringsten Ebene ist jedoch nicht zwingend im Installationszeitpunkt, da die in Betrieb genommenen Netzknoten auch miteinander kommunizieren können wenn noch kein zentraler Netzknoten mit geringster Eben vorhanden ist. Ein Sensorknoten mit der bis dahin (unter den in Betrieb genommenen Sensorknoten ) die geringste Ebene aufweist bildet so einen zumindest temporären zentralen Netzknoten, da die übrigen Sensorknoten Ihre Daten zu diesem senden werden, da sie der Gesetzmäßigkeit folgen die Daten in Richtung geringer werdender Ebenen zu senden.

Somit wird durch diese Definition einer der installierten Sensorknoten zunächst zumindest temporär, gegebenenfalls auch für alle weiteren Zeiten, als zentraler Netzknoten eingerichtet, an den sämtliche Daten kommuniziert werden, die von den anderen Sensorknoten des Sensornetzwerkes erfasst und weitergeleitet werden. Das Sensornetzwerk ist somit grundsätzlich in Betrieb gesetzt und kann funktionieren, wobei jedoch die Kommunikationswege bislang nicht optimal sind, da sie sich im Wesentlichen durch die Installationsabfolge der einzelnen Sensorknoten ergibt.

Eine Verbesserung der Kommunikationswege kann nun dadurch erfolgen, dass sich das installierte hierarchische Netzwerk (d.h. die bereits in Betrieb genommenen Sensorknoten) selbst optimiert, nämlich dadurch, dass erfindungsgemäß bei einer Kommunikation zwischen zwei in Betrieb genommenen Sensorknoten, die durch die initialen Synchronisationsinformationen möglich geworden ist, einer der beiden miteinander kommunizierenden Sensorknoten seine hierarchische Ebene ändert.

Eine derartige Änderung erfolgt dabei in Abhängigkeit der hierarchischen Ebene des anderen Sensorknotens. Hierbei wird eine Änderung der hierarchischen Ebene eines der beiden Sensorknoten nur dann stattfinden, wenn als eine zumindest einzuhaltende Bedingung die hierarchische Ebene des anderen Sensorknotens niedriger und zwar insbesondere um wenigstens zwei Ebenenstufen niedriger ist, da nur dann ersichtlich eine Optimierung des Übertragungsweges stattfinden kann.

Hierbei wird eine Änderung der hierarchischen Ebene jedoch nicht zwingend immer vorgenommen, wenn eine derartige Bedingung vorliegt, sondern nur dann, wenn zumindest eine bestimmte Eigenschaft der Kommunikation erfüllt ist.

So kann es in einem derart organisierten hierarchischen Sensornetzwerk vorgesehen sein, dass die Änderung der Hierarchieebene eines Sensorknotens nur dann stattfindet, wenn bei der Kommunikation zwischen den beiden betrachteten Sensorknoten beispielsweise eine bestimmte Güte und/oder eine bestimmte Signalstärke und/oder ein bestimmtes Signal-Rauschverhältnis und/oder eine bestimmte Belastung durch Kommunikation mit anderer Sensorknoten oder eine andere gewünschte Bedingung bei der Kommunikation erreicht, bzw. überschritten oder unterschritten wird. Diese Eigenschaften bzw. Bedingungen der Kommunikation können beispielsweise als Schwellwerte vorgegeben oder vorgebbar sein, so dass eine Änderung der hierarchischen Ebene nur dann stattfindet, wenn neben eines hierdurch erfolgten Ebenensprunges in Richtung kürzerer Kommunikationswege gleichzeitig auch eine bestimmte Kommunikationsbedingung erfüllt ist. Hierdurch wird sichergestellt, dass eine Kommunikation zwischen diesen betrachteten Sensorknoten nicht nur theoretisch kürzer ist, sondern bei Benutzung dieses kürzeren Kommunikationsweges die entsprechenden Daten auch sicher ihr Ziel erreichen. So nutzt in einer Netztopologie verständlicherweise ein kürzerer Kommunikationsweg nichts, wenn die Daten nicht vollständig und sicher auf diesem Weg ihr Ziel erreichen.

Dieser Art der Optimierung liegt der wesentliche Gedanke zugrunde, dass bei der anfänglichen Installation die Vielzahl von Sensorknoten viele unterschiedliche anfängliche insbesondere im Wesentlichen beliebige hierarchische Ebenen aufweisen können, wobei aufgrund der Nacheinanderinstallation ein jeglicher Sensorknoten des Netzwerkes mitunter mit einer Vielzahl oder einer bestimmten Anzahl von anderen in seiner Umgebung und somit im Empfangsgebiet befindlichen Sensorknoten kommunizieren kann. Aufgrund der anfänglichen Ebenenvergabe an die Sensorknoten sagt diese jeweils zugeordnete Ebene noch nichts über die tatsächlich möglichen Kommunikationswege aus. Neben dieser theoretischen Möglichkeit zur Kommunikation mit einer Vielzahl von anderen Sensorknoten kann sich somit nur ein bestimmter Weg oder nur eine begrenzte Anzahl von bestimmten Wegen als optimaler bzw. guter Kommunikationsweg erweisen, der mit Hilfe des erfindungsgemäßen Verfahrens selbsttätig ermittelt werden kann.

Hat mit Bezug auf ein nicht beschränkendes Beispiel ein Sensorknoten z.B. die Ebene 10 und befinden sich in dessen Empfangsgebiet für eine Kommunikation andere Sensorknoten, z.B. ein Knoten mit der Ebene 5 und zwei Knoten mit der Ebene 4, so wird grundsätzlich zwischen all diesen Sensorknoten eine Kommunikation stattfinden können, wobei jedoch eine optimale Kommunikation im Sinne kurzer Wege und sicherer Übertragung nur sinnvoll ist zu den Sensorknoten mit der Ebene 4, die in diesem Beispiel die geringste mit einer Kommunikation erreichbare Ebene darstellen und somit die geringste Entfernung zum zentralen Netzknoten ermöglichen. Zwischen den beiden Sensorknoten, jeweils mit der Ebene 4, ist jedoch diejenige Kommunikation wiederum als bevorzugt auszuwerten, welche die beste Eigenschaft mit Bezug auf die vorgenannten Kriterien, wie beispielsweise Güte, Signalstärke, Belastung oder Rauschverhältnis aufweist.

So wird es sinnvoll sein, die Kommunikation von dem Netzknoten der Ebene 10 mit demjenigen der beiden Netzknoten der Ebene 4 stattfinden zu lassen, bei welchen diese Eigenschaft gegeben ist. Hierbei kann allgemein diese gewünschte Eigenschaft oder Bedingung der Kommunikation bei der Versendung und dem Empfang eines Synchronisationstelegrammes geprüft werden, insbesondere zumindest von dem Sensorknoten, der das Synchronisationstelegramm empfängt.

Damit diese im Beispiel genannte bevorzugte Kommunikation zukünftig stattfinden kann, wird demnach bei einer Kommunikation zwischen diesen beiden Sensorknoten der Ebene 4 und der Ebene 10 derjenige Sensorknoten mit der Ebene 10 seine Ebenennummer ändern in Abhängigkeit der Ebene des anderen Knotens, d.h. in Abhängigkeit der Ebene 4. Die Änderung der hierarchischen Ebene eines Sensorknotens kann somit derart gewählt werden, dass sie von der Ebene des anderen Sensorknotens einen Abstand von 1 aufweist, insbesondere dass sie um eine Ebenennummer größer ist. So wird mit Bezug auf das vorgenannte Beispiel, welches hier nicht als beschränkend anzusehen ist, derjenige Sensorknoten mit der ursprünglichen Ebene 10 seine Ebene für die Kommunikation mit dem Sensorknoten der Ebene 4 auf die Nummer 5 setzen und somit einen Ebenen-Abstand von 1 zu dem anderen Sensorknoten aufweisen. Dieses vorgenannte Beispiel gilt analog für alle anderen möglichen Sensorknoten die miteinander kommunizieren können.

Aufgrund dieser Änderung der hierarchischen Ebene des Sensorknotens, im Beispiel mit der Ebene 10 zur Ebene 5, können weitere Sensorknoten in der Umgebung dieses Sensorknotens mit der gerade geänderten Ebenennummer ebenfalls ihre Ebenennummern ändern, so dass sich nach und nach eine Optimierung des Sensornetzwerkes aufgrund der vorgenannten Kriterien, d.h. einer Eigenschaft der Kommunikation und der Tatsache, dass sich die Ebenennummer zwischen zwei Sensorknoten für eine Änderung unterscheiden muss, stattfinden.

Um einem Sensorknoten überhaupt die Möglichkeit zu erschließen, seine hierarchische Ebene ändern zu können, ist es im erfindungsgemäßen Verfahren vorgesehen, dass eine Kommunikation zwischen zwei Sensorknoten oder einem Sensorknoten und einem zentralen Netzknoten, d.h. jeweils zwei Knoten des hier betrachteten Netzwerkes, vorgesehen ist, bei der beim Aussenden eines Synchronisationstelegramms die hierarchische Ebene des jeweils sendenden Knotens an den empfangenden Knoten mitgeteilt wird. So kann der empfangende Netzknoten, dem seine eigene hierarchische Ebene bekannt ist, durch Vergleich feststellen, ob eine grundsätzliche Möglichkeit besteht, die hierarchische Ebene zu ändern.

Weiterhin ist anhand einer Eigenschaft der Kommunikation, die durch den Empfang bei der Kommunikation z.B. des Synchronisationstelegramms festgestellt werden kann, zu überprüfen, ob die gewünschte Eigenschaft bzw. Bedingung erreicht wird, also beispielsweise die gewünschte Güte, Signalstärke, Kommunikationsbelastung durch andere Sensorknoten oder das Signal-Rauschverhältnis und es ist in Abhängigkeit dieses Kriteriums weiterhin zu entscheiden, ob eine Änderung der Ebene stattfinden soll.

Eine Änderung der Ebene kann sodann ohne Weiteres oder aber in einer anderen bevorzugten Ausführung in Abhängigkeit wenigstens einer weiteren Bedingung stattfinden.

So kann es vorgesehen sein, dass eine Änderung der Ebene eines Sensorknotens immer und unbedingt stattfindet, wenn ein Sensorknoten ein Synchronisationstelegramm eines anderen Sensorknotens empfängt und durch Vergleich seiner eigenen Ebene mit der empfangenen Ebene feststellt, dass er eine bessere, d.h. z.B. geringere Ebene einnehmen kann, da seine Ebene zumindest um "Eins" größer ist als die des sendenden Sensorknotens. In diesem Fall verbessert der empfangende Sensorknoten seine Ebene sofort.

Stellt ein Sensorknoten beim Empfang eines Synchronisationstelegrammes fest, dass er selbst eine um wenigstens "Eins" geringere Ebene aufweist als der Sensorknoten, der das Synchronisationstelegramm sendet, so kann dieser Sensorknoten ersichtlich seine Eben nicht verbessern. Aufgrund des Ergebnisses des Ebenenvergleiches hat dieser empfangende Sensorknoten jedoch die Information erhalten, dass sich der sendende Sensorknoten in seiner Ebene verbessern könnte. In einem solchen Fall kann es vorgesehen sein, dass der das Synchronisationstelegramm empfangende Sensorknoten eine Aufforderung an den das Synchronisationstelegramm sendenden Sensorknoten schickt, z.B. durch Aussendung eines entsprechenden Aufforderungstelegramms oder Update-Telegramms, damit dieser seine Ebene ändert.

Beispielsweise kann es vorgesehen sein, dass die Durchführung einer solchen Aufforderung nicht zwingend immer, sondern nach einer vorgegebenen oder vorgebbaren Wahrscheinlichkeit erfolgt, insbesondere mit einer Wahrscheinlichkeit von 20 - 60%. Eine solche Aufforderung wird als mit der zu berücksichtigenden Wahrscheinlichkeit mal gesendet und mal nicht.

Es kann somit durch weitere Berücksichtigung der Wahrscheinlichkeit, insbesondere einer Wahrscheinlichkeit von 20 - 60% das Kommunikationsaufkommen für die Aufforderung zur Änderung der hierarchischen Ebene reduziert werden. Weiterhin hat die Durchführung einer Änderung der hierarchischen Ebene in Abhängigkeit bzw. mit einer vorgegebenen oder vorgebbaren Wahrscheinlichkeit den besonderen Vorteil, dass die Problematik der Inselbildung in derartigen Netzwerken vermieden wird.

Hierdurch kann es beispielsweise entstehen, dass in benachbarten Räumen, in denen jeweils mehrere Sensorknoten angeordnet sind, ein raumübergreifender Datenaustausch nicht mehr möglich ist, weil grundsätzlich raumübergreifend die Kommunikationsgüte und/oder Signalqualität/-stärke voraussichtlich schlechter ist als zwischen einzelnen Sensorknoten innerhalb eines Raums, so dass ohne eine Berücksichtigung einer Wahrscheinlichkeit alleine durch die Berücksichtigung einer Kommunikationseigenschaft die Kommunikationsmöglichkeit zwischen zwei Räumen abreißen würde. So kann ein Sensorknoten, der ohne Berücksichtigung dieser Wahrscheinlichkeit ansonsten nur mit unmittelbar umgebenden Sensorknoten desselben Raums aufgrund der vorgenannten Bedingung kommunizieren würde, weiterhin seine Kommunikationsmöglichkeit zu anderen Sensorknoten in benachbarten Räumen erhalten, so dass auch raumübergreifend Daten eines Sensorknotens übermittelt werden können.

Diese Problematik kann nochmals an einem Beispiel erläutert werden. Ist beispielsweise in einem Raum ein Sensorknoten wiederum mit der hierarchischen Ebene 10 und kann dieser grundsätzlich mit einem anderen Sensorknoten der hierarchischen Ebene 4 sowohl innerhalb des eigenen Raums als auch mit einem weiteren Sensorknoten derselben Ebene in einem anderen Raum kommunizieren, so würde der Sensorknoten bei deterministischer Festlegung einer Ebenenänderung in Abhängigkeit nur der Kommunikationsgüte nur noch mit demjenigen Sensorknoten kommunizieren, der innerhalb des gleichen Raums ist, jedoch nicht mit demjenigen, der innerhalb des benachbarten Raums angeordnet ist.

Aufgrund der gegebenen Wahrscheinlichkeit z.B. von 20 - 60% zur Aufforderung der Durchführung einer Änderung bleibt somit eine Wahrscheinlichkeit von 80 - 40% bestehen, dass der Netzknoten nicht zur Änderung seiner hierarchischen Ebene auf die Ebene 5 zur Kommunikation mit dem Sensorknoten desselben Raums aufgefordert wird, sondern stattdessen bei einer anderen Kommunikation aufgefordert wird für eine weitere Kommunikation mit dem Sensorknoten des benachbarten Raums seine Ebene auf 5 zu ändern. So kann die Inselbildung vermieden und die raumübergreifende Kommunikation bewahrt bleiben.

Es kann somit in Verbindung mit einer Ebenenänderung ggfs. auch eine Änderung der in einem Sensorknoten zu berücksichtigenden Synchronisations-Information durchgeführt werden um zukünftige Kommunikationen mit einem anderen bzw. dem betreffenden neuen Sensorknoten stattfinden zu lassen.

Bei der vorgenannten Beschreibung sind einige Beispiele für hierarchische Ebenen bei der Erstinstallation genannt worden. Hierbei kann es bei dem erfindungsgemäßen Verfahren jedoch vorgesehen sein, bei der anfänglichen Installation eine anfängliche hierarchische Ebene für jeden in Betrieb genommenen Sensorknoten unterschiedlich zu wählen. Dies ist jedoch nicht zwingend nötig, grundsätzlich kann es auch vorgesehen sein, alle hierarchischen Ebenen der nacheinander installierten Sensorknoten mit Ausnahme des zentralen, zumindest temporär zentralen Netzknoten mit der geringsten Ebene gleich zu wählen. Auch in diesem Fall konvergiert das Netz, wobei jedoch eine schnellere Konvergenz erreicht wird, wenn die anfänglichen hierarchischen Ebenen unterschiedlich gewählt sind.

Hierbei wird unter einer Konvergenz des Netzes verstanden, dass sich nach einer bestimmten Zeit die anfänglich gewählten hierarchischen Ebenen derart ändern, dass sich Kommunikationswege zwischen den einzelnen Sensorknoten ergeben, bei denen jeweils solche Sensorknoten miteinander kommunizieren, die einen Ebenen-Abstand von 1 aufweisen, so dass grundsätzlich ein kurzer Kommunikationsweg zum Sensorknoten mit der niedrigsten Ebene, d.h. den zentralen Sensornetzknoten der Ebene 0 ergibt.

In besonders bevorzugter Ausgestaltung kann es hierbei vorgesehen sein, dass eine anfängliche hierarchische Ebene eines Sensorknotens, insbesondere mit Ausnahme des zentralen Netzknotens, größer gewählt wird als die maximale Anzahl der zu installierenden Sensorknoten.

Dies hat den besonderen Vorteil, dass nach der Installation eines derartigen hierarchischen Netzwerkes die Konvergenz des Netzes auf einfache Art und Weise überprüft werden kann, indem nämlich beispielsweise die hierarchische Ebene eines Sensorknotens ausgelesen und überprüft wird. Hat dieser Netzknoten beim Auslesen eine hierarchische Ebene, welche größer ist als die maximale Anzahl der installierten Sensorknoten, so kann hierdurch festgestellt werden, dass es diesem Sensorknoten bislang nicht gelungen ist, andere Sensorknoten zu empfangen und hierbei seine hierarchische Ebene herabzusetzen. Ein solcher aufgefundener Sensorknoten kann somit als verlorener Sensorknoten identifiziert werden und es kann versucht werden, eine Eingliederung in das Netzwerk erneut zu versuchen.

Eine solche Überprüfung kann beispielsweise vorgenommen werden mit einem mobilen Installationsgerät, welches geeignet ist, die Sensorknoten, die bei der Installation in Betrieb genommen wurden, hinsichtlich ihrer hierarchischen Ebene abzufragen. Hierbei kann es sich ganz besonders bevorzugt um ein mobiles Installationsgerät handeln, welches auch zur Installation der Sensorknoten eingesetzt wurde, um den jeweils in Betrieb genommenen Sensorknoten die anfänglichen Synchronisationsinformationen zu übermitteln, sofern dieser die Information nicht selbst erlernt oder bereits herstellerseitig gespeichert hat.

Dies ist insoweit besonders vorteilhaft, weil in diesem Installationsgerät sämtliche Synchronisationsinformationen aller installierten Sensorknoten vorliegen können, nämlich beispielsweise diejenigen Zeiten, wann Synchronisationstelegramme eines Sensorknotens ausgesendet werden und zu welchen Zeiten ein entsprechender Sensorknoten sein Empfangsfenster öffnet.

Soll somit beispielsweise mit einem solchen Installationsgerät ein Sensorknoten hinsichtlich seiner Eingliederung in das Netzwerk überprüft werden, so kennt dieses Installationsgerät das Empfangsfenster dieses speziellen Sensorknotens und kann rechtzeitig ein entsprechendes Synchronisationstelegramm absenden, um mit diesem Sensorknoten in Kommunikation zu treten und hierbei seine hierarchische Ebene auszulesen. Auch auf andere Weisen können diese Kommunikationen initiiert werden. Z.B. kann ein Installationsgerät wenigstens eine Periode der Synchronisationstelegramme warten und so alle im Empfangsbereich liegenden Sensorknoten lernen und insbesondere danach oder bereits unmittelbar beim Empfang eines Synchronisationstelegramms abfragen.

Sind sämtliche Sensorknoten innerhalb des hierarchischen Netzes in Betrieb genommen und stehen mit anderen Sensorknoten in Empfang, so können diese wie vorgenannt nacheinander, d.h. iterativ ihre hierarchischen Ebenen herabsetzen, bis letztendlich das Sensornetzwerk durch Iteration dieses Verfahrens konvergiert ist und eine weitere Herabsetzung der jeweiligen hierarchischen Ebenen zumindest zunächst nicht mehr möglich ist.

Gemäß der Erfindung kann es ebenso geprüft werden, ob ein Sensorknoten auch tatsächlich Verbindung gefunden hat zum zentralen Sensorknoten mit der geringsten Ebene, insbesondere der Ebene NULL. Diese Prüfung kann wiederum durch Abfrage der Ebene eines Sensorknotens erfolgen, wie z.B. zuvor beschrieben. Hat ein abgefragter Sensorknoten eine Ebene die kleiner oder gleich der maximalen Anzahl der installierten und in Betrieb genommenen Sensorknoten ist, so hat dieser eine Verbindung zum zentralen Netzknoten, da der Sensorknoten ansonsten nicht in der Lage gewesen wäre seine ursprünglich Ebene auf einen Wert unter oder auf die Maximalanzahl herunterzusetzen.

Eine nachträgliche Änderung der hierarchischen Ebene kann ebenso auftreten, wenn beispielsweise Sensorknoten ausfallen, "verloren" gehen, durch Umsetzen von Möbeln oder sonstige Änderung von Empfangsbedingungen, so dass dann, wie zuvor beschrieben, eine Änderung der hierarchischen Ebene stattfinden kann.

Um dies zu ermöglichen, ist es darüber hinaus sinnvoll, dass ein Sensorknoten des hierarchisch geordneten Netzwerkes nicht nur mit einem, sondern gegebenenfalls auch noch mit anderen Sensorknoten in Verbindung steht oder zumindest stehen kann, und sofern dies nicht parallel gewünscht ist, zumindest Informationen weiterhin bereithält über die Synchronisationsmöglichkeit mit anderen Netzknoten, wenn der ihm zugeordnete Sensorknoten ausfallen sollte.

Der Einsatz eines mobilen Installationsgerätes empfiehlt sich darüber hinaus auch deswegen, da dieses beispielsweise von einem Installateur mitgetragen wird und somit auch jeweils an dem Ort vorhanden ist, wo nacheinander die Sensorknoten in Betrieb genommen werden. Dies bedeutet, dass das mobile Installationsgerät sich an derselben Stelle befindet wie der neue zu installierende Sensorknoten und dass das Installationsgerät insoweit auch im Wesentlichen dieselben Empfangsbedingungen aufweist wie der zu installierende Sensorknoten.

So kann anhand dieser Empfangsbedingungen dem neu zu installierenden Sensorknoten aus dem Installationsgerät heraus die jeweils notwendige Synchronisationsinformation zur Verfügung gestellt werden, damit dieser Sensorknoten in die Lage gesetzt wird, mit anderen zuvor installierten Sensorknoten die Verbindung aufzunehmen.

Beispielsweise können hierbei Synchronisationsinformationen über mehrere zuvor installierte Sensorknoten übermittelt werden, gegebenenfalls über alle zuvor installierten oder nur über ausgewählte zuvor installierte, bei denen bereits im Installationsgerät niedergelegt ist, zu welchem Sensorknoten die besten Empfangsbedingungen bestehen.

Synchronisationsinformationen über ausgewählte zuvor installierte Sensorknoten können in einer Ausführung beispielsweise wenigstens zum Teil solche Synchronisationsinformationen umfassen, die zu solchen Sensorknoten gehören, die noch keine Kommunikation zu anderen Sensorknoten aufnehmen konnten. Dies kann wie vorbeschrieben geprüft werden durch Abfrage der Ebenennummer.

Ist diese gegenüber der ursprünglichen Ebene ungeändert, so ist der betreffende Sensorknoten bislang ohne Kommunikation mit anderen verblieben. Wird die Synchronisationsinformation zu einem solchen Knoten zwangsweise an einen neu zu installierenden übermittelt, so wird der "verlorene" Sensorknoten in das Netz eingegliedert und kann Verbindung aufnehmen. In einem mobilen Installationsgerät kann in dem Speicher für Synchronisationsinformation z.B. ein Teil reserviert sein für Synchronisationsinformation zu solchen verlorenen Sensorknoten.

Der Einsatz eines zumindest zunächst temporären zentralen Netzknotens, der beispielsweise als üblicher Sensorknoten installiert wird, hat den besonderen Vorteil, dass z.B. in einer Liegenschaft, ausgehend von zwei Orten, gleichzeitig das Netzwerk durch verschiedene Installateure aufgebaut werden kann, wobei beide Installateure nacheinander ihre jeweiligen Sensorknoten installieren und einen temporären zentralen Netzknoten jeweils für ihren Bereich in Betrieb nehmen können. Beide Teilbereiche können somit bereits nach der Installation ihre Konvergenz starten, so dass hierdurch der Aufbau des gesamten Netzwerkes beschleunigt wird. Sind die Bereiche jeweils installiert, so kann ein neuer z.B. gemeinsamer zentraler Netzknoten definiert werden, wobei sich dann die Iteration des gesamten Netzes deutlich schneller ergibt. Wird keine zumindest temporär zentraler Netzknoten definiert, so ergibt sich ein solcher automatisch dadurch dass es immer einen Sensorknoten gibt, der die geringste Ebene aufweist unter allen zu betrachtenden Sensorknoten die installiert sind.

Grundsätzlich kann es auch vorgesehen sein, dass ein temporärer zentraler Netzknoten als Sensorknoten installiert wird oder automatisch gebildet wurde und ein neuer temporärer oder dann für alle Zeiten geltender zentraler Netzknoten gebildet wird, insbesondere hinzugefügt wird. Hierbei kann es vorgesehen sein, dass demjenigen Sensorknoten, der vorher als temporärer zentraler Netzknoten z.B. mit der Ebene 0 oder einen anderen Ebene in Betrieb war, eine neue anfängliche hierarchische Ebene, insbesondere eine Ebene größer als die Gesamtanzahl aller Sensorknoten zugeordnet wird, so dass sich dieser Sensorknoten sodann automatisch hinsichtlich seiner Ebene wieder in das Gesamtnetz eingliedert.

Die Verwendung eines temporären zentralen Netzknotens hat darüber hinaus auch den Vorteil, wenn beispielsweise ein bereits bestehendes hierarchisches Netzwerk ergänzt werden soll. Beispielsweise kann schon ein hierarchisches Netzwerk bestehen, welches vollständig konvergiert ist. Es kann sodann vorgesehen sein, in dieser Liegenschaft weitere Sensorknoten hinzuzufügen. Diese weiteren Sensorknoten können zunächst mit wenigstens einem temporären zentralen Netzknoten installiert werden und ihrerseits nur die neu hinzugefügten Sensorknoten zur Konvergenz gebracht werden. Der in dem neuen Netzbereich vorhandene temporäre zentrale Netzknoten kann sodann nach der Konvergenz uminstalliert werden in einen Sensorknoten des Gesamtnetzes, woraufhin dann das Gesamtnetz mit dem neu hinzugefügten Netz zu einem neuen Netz konvergiert.

Mit dem erfindungsgemäßen Verfahren ist festgestellt worden, dass die Konvergenz eines hierarchischen zu installierenden Netzwerkes deutlich beschleunigt werden kann. Insbesondere ergibt sich hier die Möglichkeit festzustellen, ob die Konvergenz des Netzes und eine Eingliederung aller einzelner Sensorknoten erfolgreich stattgefunden hat, insbesondere dann, wenn bei der Installation der Sensorknoten derart hohe hierarchische anfängliche Ebenen vergeben werden, die größer sind als die Gesamtanzahl der zu installierenden Sensorknoten.

Hierbei kann es auch vorgesehen sein, dass die Vergabe der ursprünglichen Ebene eines Sensorknoten in Abhängigkeit der Topographie einer Liegenschaft erfolgt. Z.B. können die Sensorknoten im Erdgeschoß die Ebenen 0 bis 999 aufweisen, in der ersten Etage einer Liegenschaft die Ebene 1000 bis 1999, in der zweiten Etage die Ebenen 2000 bis 2999 und so fort. So kann z.B. schon eine anfängliche Strukturierung erreicht werden z.B. in Richtung eines zentralen Netzknotens im Erdgeschoß.

Ein Ausführungsbeispiel ist in den folgenden Figuren beschrieben. Es zeigen:

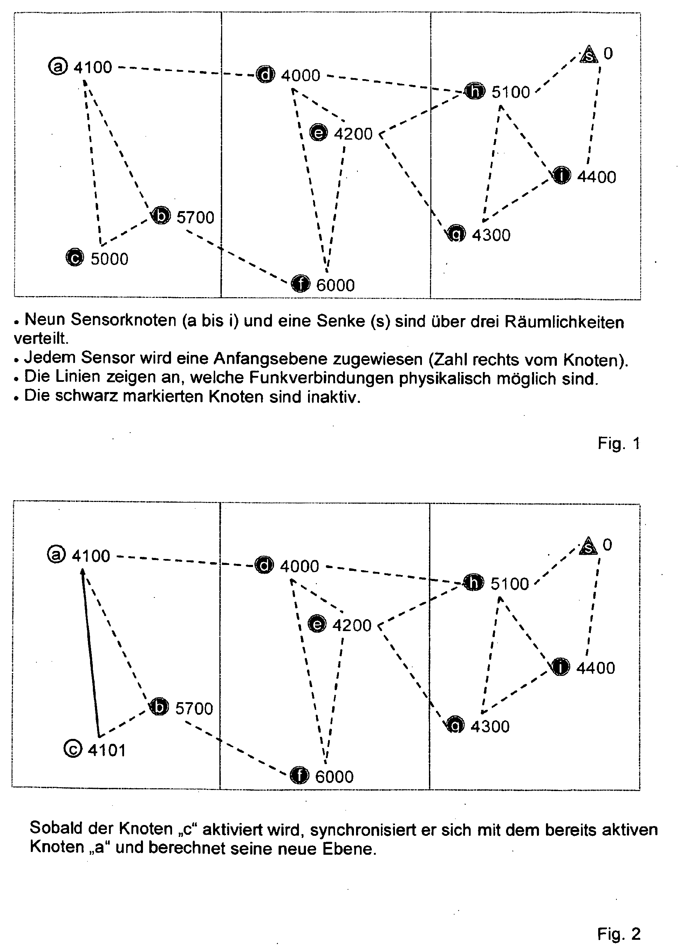

- Figuren 1 bis 22:: den Verlauf der Installation und die hierbei erfolgenden Änderungen der den Sensorknoten zugeordneten Ebenen.

Die Figur 1 zeigt neun Sensorknoten a bis i und einen zentralen Netzknoten s, die über drei Räume verteilt angeordnet sind. Bei der Installation (z.B. durch ein mobiles Installationsgerät) oder in einer anderen Ausführung bereits vor der Installation werden den Sensorknoten anfängliche Ebenen zugewiesen, die in den Figuren jeweils rechts neben den Sensorknoten dargestellt sind und hier die Werte von 4000 bis 6000 aufweisen, wobei der zentrale Netzknoten s die Ebene 0 aufweist. Weiterhin sind in den Figuren die physikalisch möglichen Funkverbindungen als Linien zwischen den jeweiligen Sensorknoten dargestellt. Inaktive Sensorknoten sind schwarz dargestellt, aktivierte, also in Betrieb genommene Sensorknoten sind weiss dargestellt.

Wie Figur 1 zeigt wird bei der Installation zunächst der Sensorknoten a in Betrieb genommen. Bei dieser Inbetriebnahme werden an den Sensorknoten a, sowie bei weiterer Inbetriebnahme der anderen Sensorknoten auch an diese Synchronisationsinformationen übermittelt, um mit anderen Sensorknoten kommunizieren zu können, wie es im allgemeinen Teil beschrieben wurde. Alternativ können die Synchronisationsinformationen bereits in den Sensorknoten vorhanden sein oder nach der Aktivierung gelernt werden. Im Folgenden wird immer davon ausgegangen, dass die nötigen Synchronisationsinformationen vorliegen.

Gemäß Figur 2 wird der Sensorknoten c als nächstes in Betrieb genommen. Ab diesem Augenblick können die Sensorknoten a und c miteinander kommunizieren. Dies erfolgt dadurch, dass z.B. der Sensorknoten a ein Synchronisationstelegramm aussendet und dabei seine Ebene 4100 übermittelt. Der Sensorknoten c, der zur Sendezeit des Synchronisationstelegramms sein Empfangsfenster öffnet empfängt das Synchronisationstelegramm und erfährt so, dass der mit einem Knoten kommunizieren kann, der eine bessere, d.h. geringere Ebene aufweist als er selbst.

Ist hier als Bedingung z.B. die Empfangsqualität ausreichend, so ändert daraufhin ohne weitere Bedingung der Sensorknoten c seine ursprüngliche Ebene 5000 auf 4101, was der Ebene des Sensorknotens a plus 1 entspricht. Im Weiteren kann neben der Änderung der Ebene aufgrund der Kommunikation auch ein Datenaustausch stattfinden, was jedoch hier nicht weiter beschrieben wird.

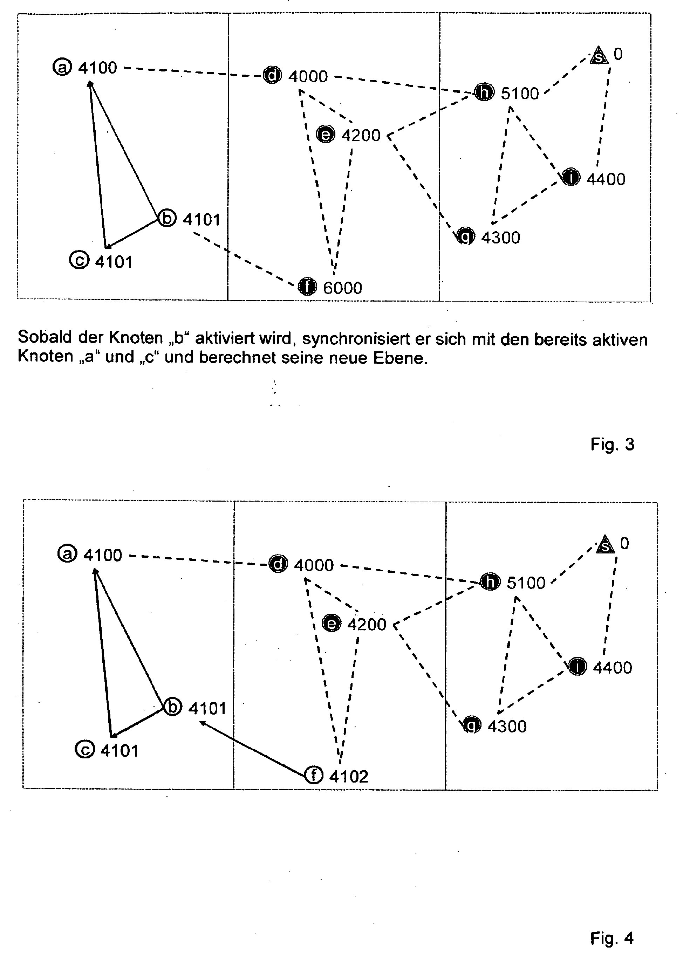

In Figur 3 wird der Sensorknoten b aktiviert, der die ursprüngliche Ebene 5700 aufweist. Dieser Sensorknoten kann nun mit den beiden vorher aktivierten Sensorknoten a und c kommunizieren durch Empfang eines jeweiligen Synchronisationstelegramms. Hierbei stellt der Sensorknoten b fest, dass er sich gegenüber dem Sensorknoten a auf die Ebene 4101 verbessern kann. Somit weisen die Sensorknoten c und b die gleiche Ebene auf, da beide mit den Sensorknoten a kommunizieren können. Auch hier muss als Bedingung für die Änderung z.B. die ausreichende Empfangsqualität vorliegen. Dies gilt auch für die weiteren In-Betriebnahme der anderen Sensorknoten.

Gemäß Figur 4 wird der weitere Sensorknoten f hinzugenommen, der ausschließlich nur mit dem Sensorknoten b kommunizieren kann und von diesem erfährt, dass der Sensorknoten f seine Ebene reduzieren kann auf 4102, also die Ebene von Sensorknoten b plus 1.

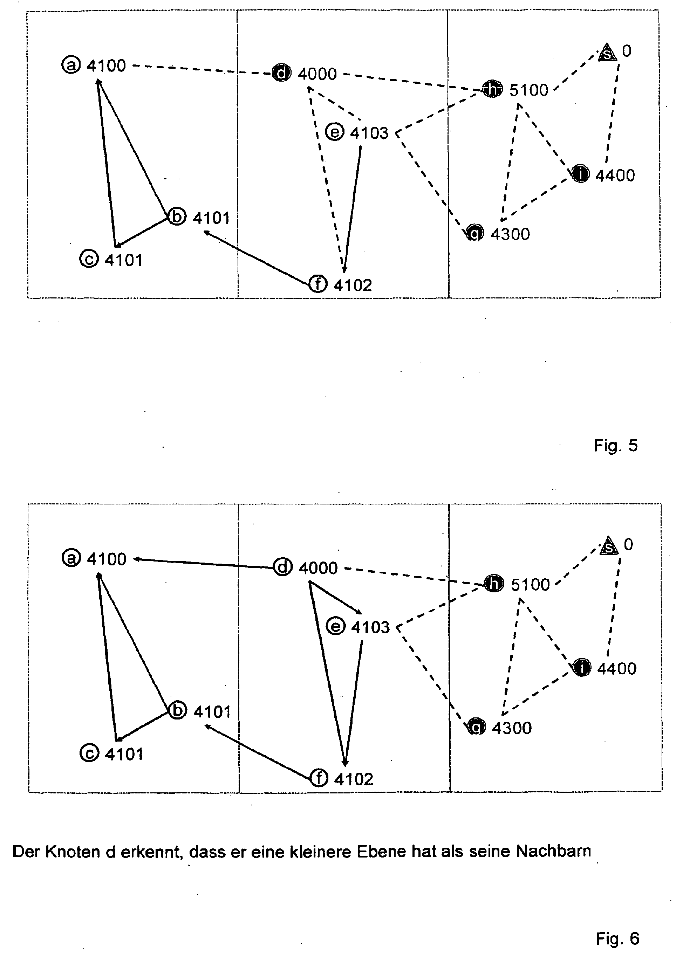

Die Figur 5 zeigt, dass weiterhin der Sensorknoten e in Betrieb genommen wird. Dieser kann aktuell nur vom Sensorknoten f ein Synchronisationstelegramm empfangen, da weitere Sensorknoten aus einem Empfangsbere9ich noch nicht in Betrieb sind. Nach Empfang eines Telegramms des Sensorknoten f ändert daher der Sensorknoten e seine Ebene auf 4103.

Gemäß Figur 6 wird der Sensorknoten d in Betrieb genommen. Dieser hat zur Zeit unter den aktivierten Sensorknoten die geringste Ebene von 4000 und merkt daher beim Empfang von Synchronisationstelegrammen der Sensorknoten a, e und f, mit denen er jeweils kommunizieren kann, dass er seine Ebene nicht verbessern kann, da alle diese Sensorknoten eine höhere Ebene aufweisen.

Der Sensorknoten d kann jedoch veranlassen, dass die Sensorknoten a, e und f aufgefordert werden ihre Ebenen zu ändern. Hierfür ist es vorgesehen ein Aufforderungstelegramm zu versenden. Erfindungsgemäß wird ein solches Aufforderungstelegramm jedoch nicht zwingend immer versendet, wenn sich eine solche Möglichkeit ergibt, sondern nur mit einer bestimmten Wahrscheinlichkeit, z.B. von 20 bis 60 %. Im vorliegenden Falle ergibt sich aufgrund dieser Wahrscheinlichkeit, dass der Sensorknoten keine Aufforderungstelegramme an die Sensorknoten e und f versendet, sondern nur eines an den Sensorknoten a, obwohl zu diesem wegen der raumübergreifenden Kommunikation die Empfangsgüte schlechter ist als zu den beiden anderen Sensorknoten. Aufgrund dieser weiterhin berücksichtigten Wahrscheinlichkeit können so erfindungsgemäß raumübergreifenden Kommunikationen erhalten bleiben, selbst wenn andere Kommunikationen empfangsstärker wären. So wird eine Inselbildung vermieden, wie sie im allgemeinen Teil beschrieben wurde.

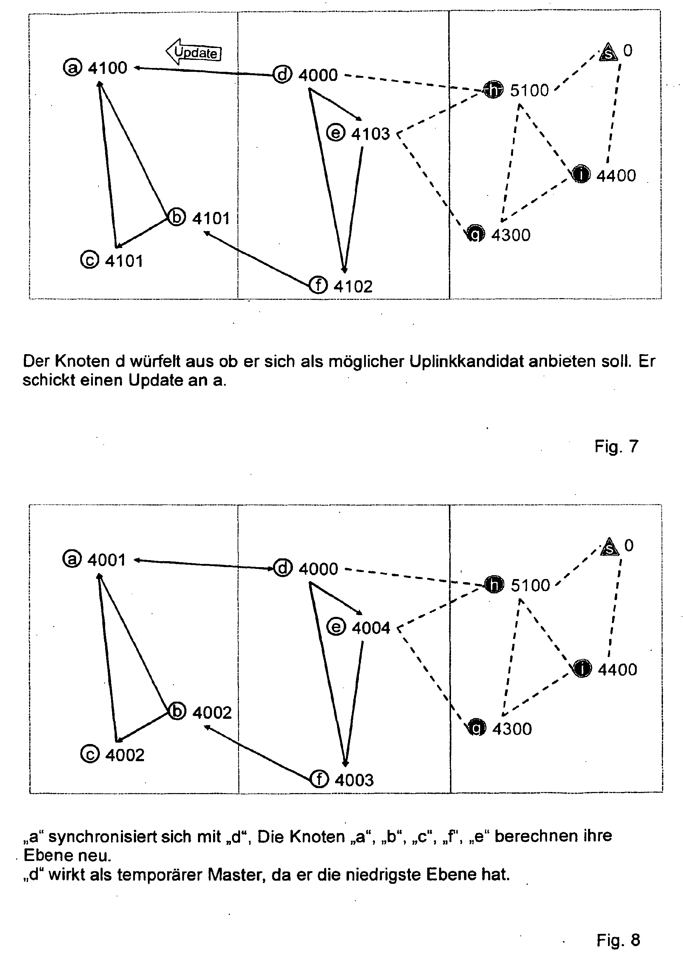

Die Versendung eines Aufforderungstelegramms ist in der Figur 7 als "UPDATE" dargestellt, welches vom Sensorknoten d zum Sensorknoten a geschickt wird, so dass dieser, wie in Figur 8 dargestellt seine Ebene ändert in die Eben 4001, also 4000 des Sensorknotens d puls 1.

Wie zuvor zu den Figuren 1 bis 6 beschrieben ändern daraufhin alle dem Sensorknoten a nachgeordnete Sensorknoten b, c , e und f nach Empfang der jeweiligen Synchronisationstelegramme ebenfalls Ihre Ebene. Da nun unter den bislang aktiven Sensorknoten der Sensorknoten d die geringste Ebene aufweist über nimmt dieser die Stellung des temporären zentralen Netzknotens, d.h. evtl. Messdatensendungen werden zunächst an diesen gerichtet und dort gesammelt.

Vor der Aktivierung des Sensorknoten d war der Sensorknoten a der temporäre zentrale Netzknoten, der somit automatisch diese Stellung verloren hat und evtl. bis dahin angesammelte Daten an den neuen temporären Netzknoten weiter übermittelt. Dies gilt nicht nur in dieser Ausführung sondern allgemein.

Allgemein gilt, dass jeder Sensorknoten insbesondere periodisch mit der vorgenannten Wahrscheinlichkeit bestimmt, ob er ein Aufforderungstelegramm versendet an umgebenden Sensorknoten, um sich diesem Sensorknoten als besseren Kommunikationspartner anzubieten.

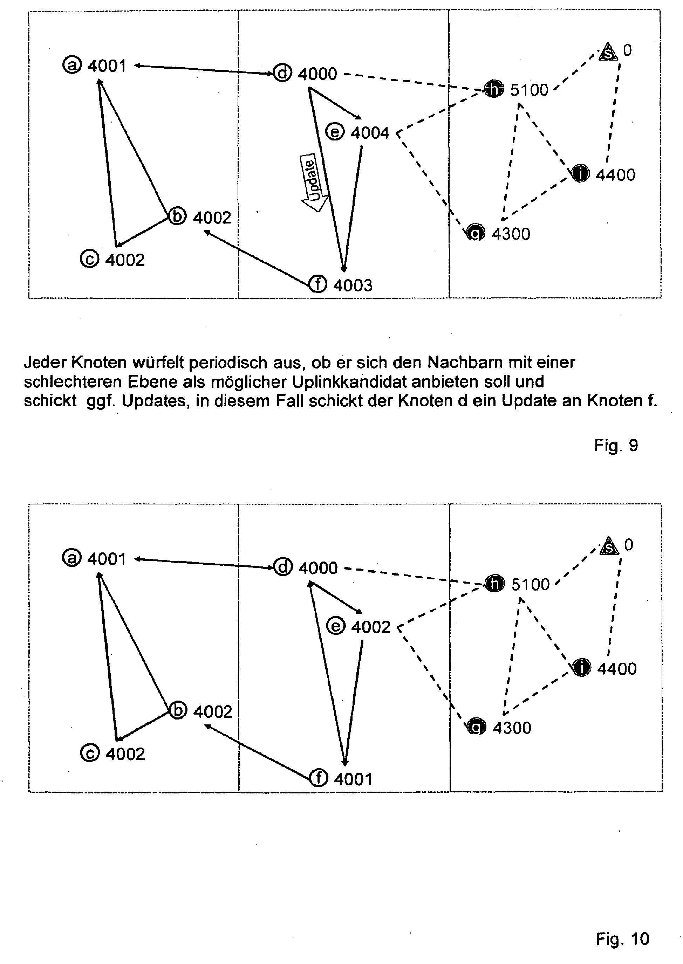

So zeigt Figur 9, dass der Knoten d gemäß der Wahrscheinlichkeit bestimmt hat, dass ein solches Aufforderungstelegramm an den Sensorknoten f gesendet wird, der daraufhin, wie Figur 10 zeigt, seine Ebene auf 4001 ändert. Durch eine Kommunikation zwischen den Sensorknoten f und e wird weiterhin bewirkt, dass das Knoten e seine Ebene auf 4002 reduziert.

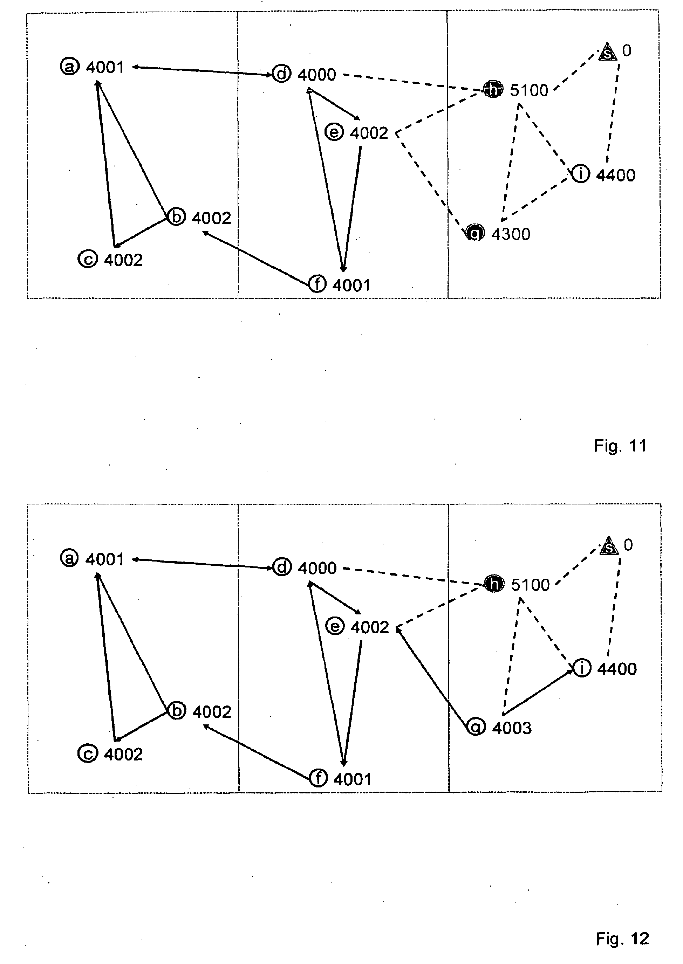

Gemäß Figur 11 erfolgt als weitere Aktivierung die In-Betriebnahme des Sensorknotens i mit der Ebene 4400. Dieser hat bislang keinen Kommunikationspartner und sendet lediglich periodisch Synchronisationstelegramme.

Gemäß Figur 12 wird der Sensorknoten g mit der Ebene 4300 in Betrieb genommen. Dieser kann sowohl vom Sensorknoten e als auch vom Sensorknoten i Synchronisationstelegramme empfangen. Da gegenüber dem Sensorknoten e eine stärkere Verbesserung der Ebene möglich ist ändert der Sensorknoten g seine Ebene auf 4003, also die Ebene des Sensorknotens e plus 1.

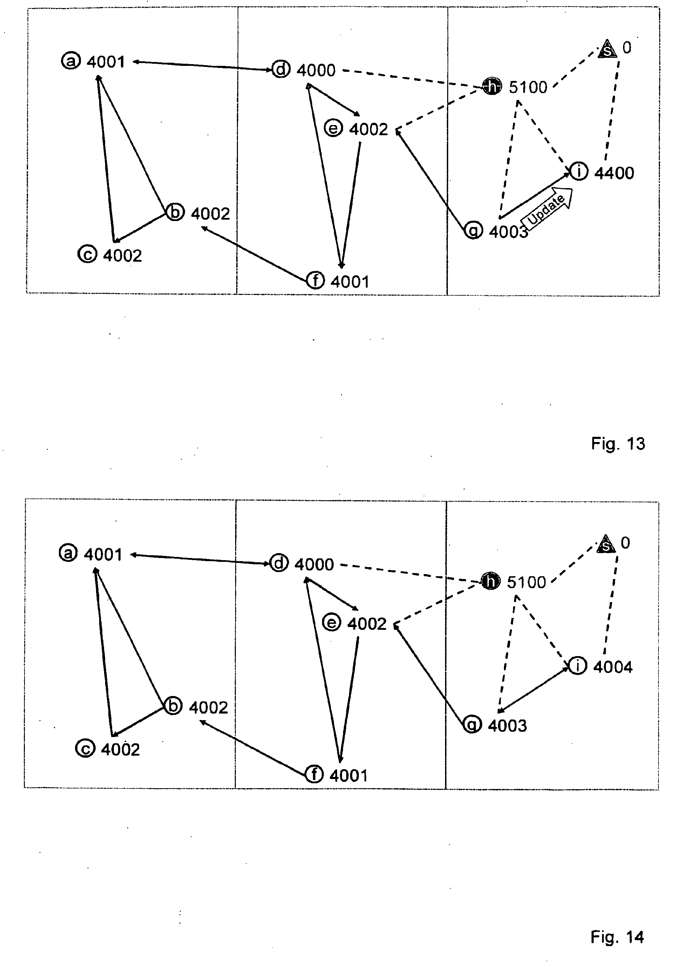

Figur 13 zeigt dass der Sensorknoten g gemäß der Wahrscheinlichkeit ein Aufforderungstelegramm an den Sensorknoten i versendet. Der Sensorknoten i ändert daraufhin seine Ebene auf 4004, wie es Figur 14 zeigt. Diese Änderung wäre auch möglich gewesen, wenn der Sensorknoten i vor dem Aufforderungstelegramm ein normales Synchronisationstelegramm vom Sensorknoten g empfangen hätte, welches periodisch gesendet wird. Vorliegend ist das Aufforderungstelegramm eher abgesendet worden.

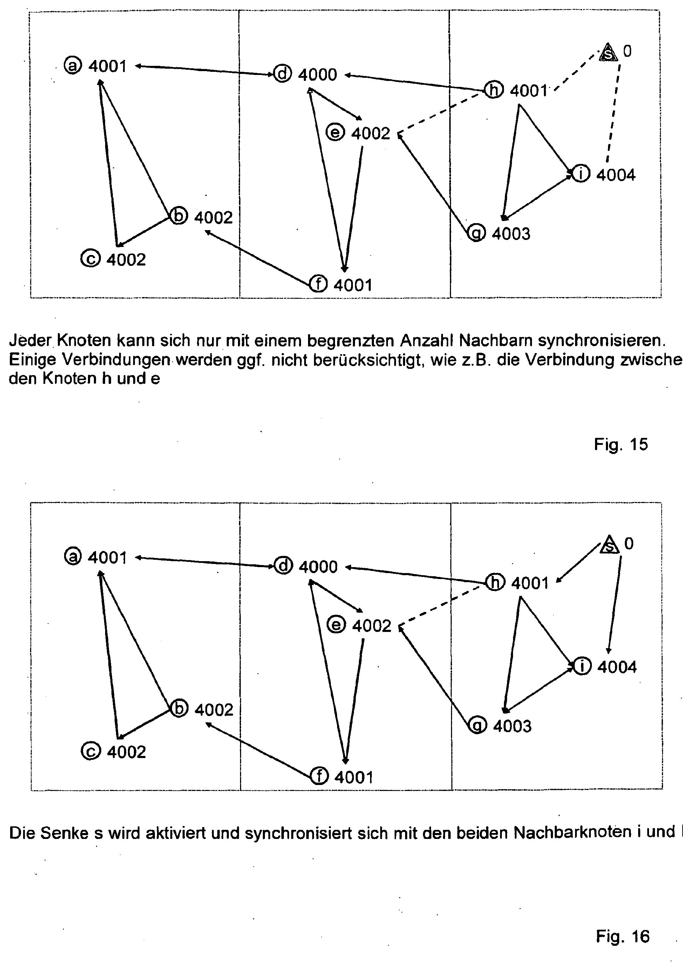

In Figur 15 wird der Sensorknoten h in Betrieb genommen. Dieser Empfängt ein Synchronisationstelegramm vom Sensorknoten d und ändert seine Ebene auf 4001. Da ein Sensorknoten z.B. nur mit einer begrenzten Anzahl von benachbarten Sensorknoten kommunizieren kann, obwohl physikalisch eine Verbindung möglich wäre, bleibt hier z.B. die Kommunikation zwischen den Sensorknoten h und e ohne Beachtung, was hier durch die punktierte Linie zwischen diesen Sensorknoten angedeutet wird.

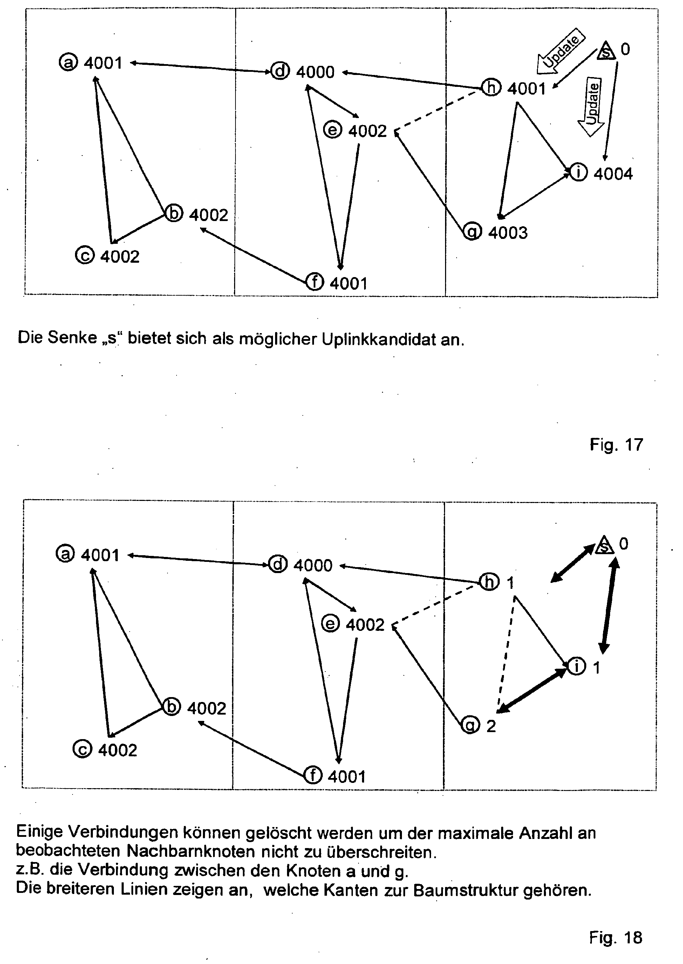

In Figur 16 wird der endgültige zentrale Sensorknoten s mit der Ebene 0 in Betrieb benommen und bietet sich gemäß der Wahrscheinlichkeit als Uplink-Möglichkeit an gegenüber den Sensorknoten h und i, die , wie Figur 18 zeigt Ihre Ebenen jeweils auf 1 ändern. Wegen der vorgenannten Begrenzung von maximalen Kommunikationswegen kann es hier z.B. vorgesehen sein, dass der Weg zwischen h und g gelöscht wird. Der Sensorknoten g kommuniziert somit nur noch mit e und i und ändert somit seine Ebene in Abhängigkeit von i auf 2.

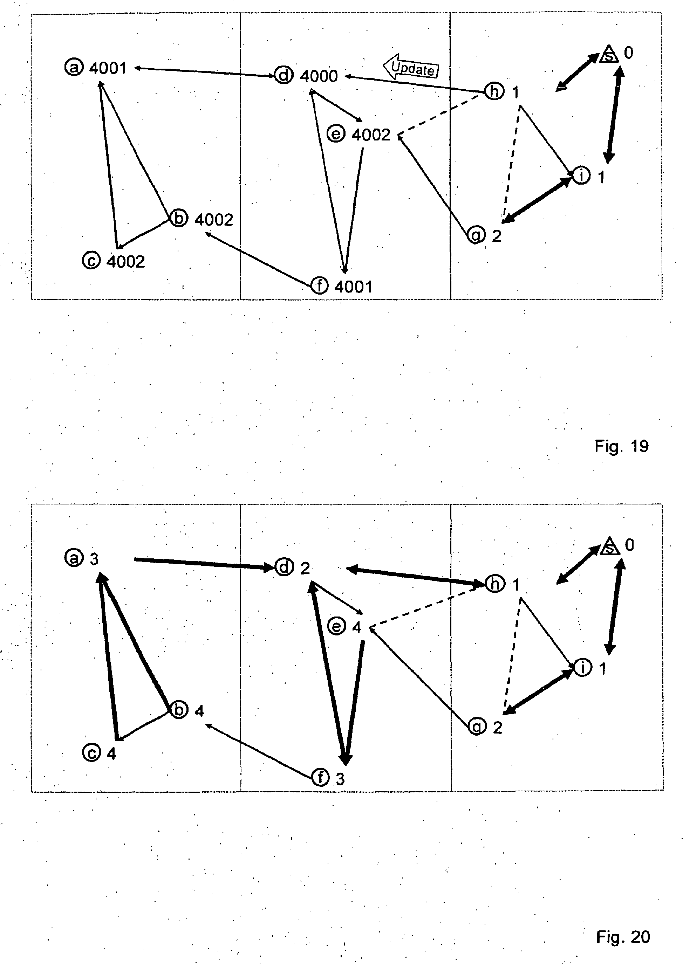

Figur 19 zeigt, dass der Sensorknoten h ein Aufforderungstelegramm an d sendet, um diesem mitzuteilen, dass dieser Sensorknoten sich verbessern kann auf 2, was gemäß Figur 20 erfolgt.

Durch Empfang von Synchronisationstelegrammen ändern sich nachfolgend, wie zuvor beschrieben auch die Ebenen der Sensorknoten a, b, c, f und e.

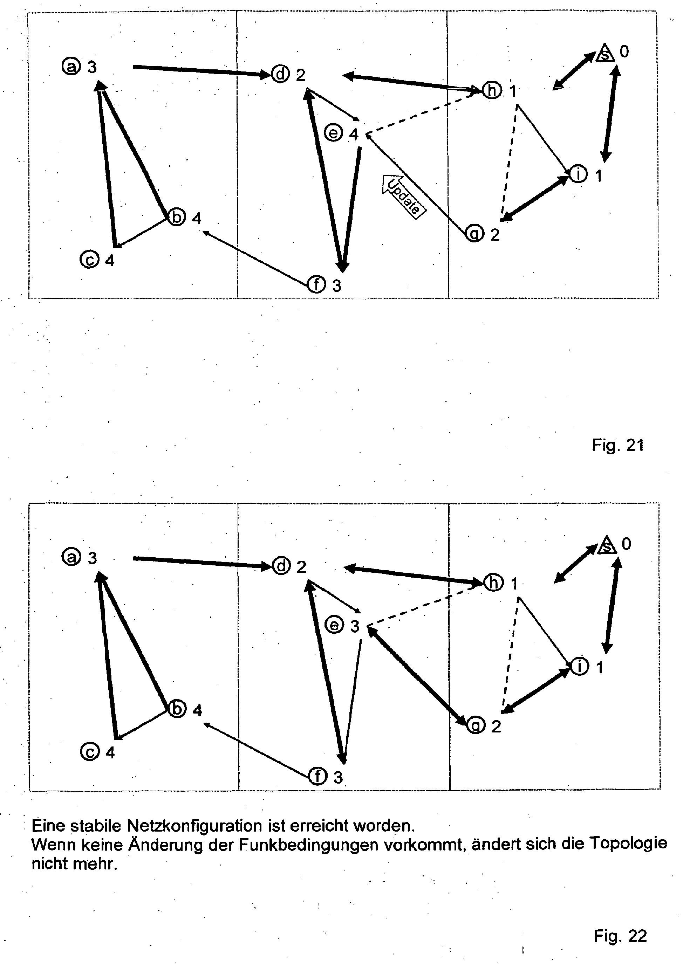

Figur 21 zeigt, dass der Sensorknoten 2 eine Aufforderung an den Sensorknoten e versendet. Dieser kann seine Ebene sodann auf 3 ändern und es ist eine stabile Netzwerkkonfiguration erreicht, die Figur 22 zeigt. Wenn sich keine Änderung bei den Funkbedingungen ergibt, folgen auch keine weiteren Änderungen der Ebenen. Das Netz ist somit konvergiert.

Die Messdaten der jeweiligen Sensorknoten werden immer in die Richtung zu geringeren Ebene versendet, so dass diese bei dem zentralen Netzknoten s ankommen.

Wenn vorangehend erwähnt wurde, dass ein Sensorknoten ein Aufforderungstelegramm gemäß einer Wahrscheinlichkeit versendet, so kann dies in einer Ausführung z.B. darin verstanden werden, dass die Sensorknoten periodisch ein Pseudo-Zufallsergebnis erzeugen, welches wahrscheinlichkeitsverteilt ist. Entsprechend dieses Ergebnisses erfolgt eine Aussendung eines Aufforderungstelegramms oder auch nicht.

## Patentansprüche

1. Verfahren zur Installation eines hierarchischen Netzwerkes mit mehreren Sensorknoten (a,...,i), welche Sensormesswerte direkt oder indirekt über Sensorknoten an einen zentralen Netzknoten (s) kommunizieren, bei dem nacheinander Sensorknoten (a,...,i) in Betrieb genommen werden,
a. wobei ein Sensorknoten (a,...,i) bei Inbetriebnahme eine anfängliche hierarchische Ebene (4000, 4100, 4200,....) aufweist, insbesondere diese Ebene (4000, 4100, 4200,....) zugeordnet wird und,
b. wobei ein Sensorknoten (a,...,i) bei Inbetriebnahme Synchronisations- Informationen gespeichert hat, um zumindest mit einigen, insbesondere mit allen in dessen Empfangsgebiet befindlichen und insbesondere zuvor in Betrieb genommenen Sensorknoten (a,...,i) kommunizieren zu können,
c. wobei wenigstens ein Sensorknoten (a,...,i) zumindest temporär einen zentralen Netzknoten bildet, insbesondere der/die mit der niedrigsten hierarchischen Ebene,
d. wobei bei einer Kommunikation zwischen zwei Sensorknoten (a,...,i) oder einem Sensorknoten (a,...,i) und einem zentralen Netzknoten (s) ein Synchronisationstelegramm ausgesendet wird, mit welchem die hierarchische Ebene (4000, 4100, 4200,...) des sendenden Knotens (a,...,i) an den empfangenden Knoten (a,...,i) mitgeteilt wird,
**dadurch gekennzeichnet, dass**
bei oder nach einer Kommunikation einer der Sensorknoten (a,...,i) seine hierarchische Ebene (4000, 4100, 4200,...) ändert in Abhängigkeit der hierarchischen Ebene (4000, 4100, 4200,...) des anderen Sensorknotens (a,...,i) wobei das Durchführen der Änderung wenigstens abhängig ist von einer Eigenschaft der Kommunikation.

2. Verfahren nach Anspruch 1, **dadurch gekennzeichnet, dass** eine anfängliche hierarchische Ebene (4000, 4100, 4200,...) für jeden in Betrieb genommenen Sensorknoten (a,...,i) unterschiedlich ist.

3. Verfahren nach Anspruch 2, **dadurch gekennzeichnet, dass** eine anfängliche hierarchische Ebene (4000, 4100, 4200,....) eines Sensorknotens (a,...,i) mit Ausnahme des zentralen Netzknotens (s) größer gewählt wird als die maximale Anzahl der zu installierenden Sensorknoten (a,...,i).

4. Verfahren nach einem der vorherigen Ansprüche, **dadurch gekennzeichnet, dass** die anfängliche hierarchische Ebene (4000, 4100, 4200,...) und/oder die Synchronisations-Informationen von einem mobilen Installationsgerät an einen Sensorknoten (a,...,i) übermittelt wird/werden.

5. Verfahren nach Anspruch 4, **dadurch gekennzeichnet, dass** durch ein mobiles Installationsgerät die Synchronisationsinformationen zu einer Auswahl von allen möglichen vorher installierten Sensorknoten (a,...,i) an einen neu installierten Sensorknoten (a,...,i) übermittelt werden, insbesondere wobei die Auswahl wenigstens zum Teil Informationen zu solchen Sensorknoten (a,...,i) umfasst, die noch keine Kommunikation mit anderen Sensorknoten (a,...,i) aufnehmen konnten.

6. Verfahren nach einem der vorherigen Ansprüche, **dadurch gekennzeichnet, dass** die Synchronisations-Informationen von einem Sensorknoten (a,...,i) gelernt werden, dadurch dass ein neu in Betrieb genommener Sensorknoten (a,...,i) sein Empfangsfenster öffnet für die Dauer wenigstens einer Periode der ausgesendeten Synchronisationstelegramme anderer Sensorknoten (a,...,i).

7. Verfahren nach einem der vorherigen Ansprüche, **dadurch gekennzeichnet, dass** bei einer Änderung der hierarchischen Ebene (4000, 4100, 4200,....) eines Sensorknotens (a,...,i) die sich ändernde Ebene derart gewählt wird, dass sie von der Ebene des anderen Sensorknotens (a,...,i) einen Abstand von "Eins" aufweist, insbesondere dass sie um eine Ebene größer ist.

8. Verfahren nach einem der vorherigen Ansprüche, **dadurch gekennzeichnet, dass** bei einer Änderung der hierarchischen Ebene (4000, 4100, 4200,....) eines Sensorknotens (a,...,i) die sich ändernde Ebene derart gewählt wird, dass sie von der Ebene des anderen Sensorknotens (a,...,i) einen Abstand von größer als "Eins" aufweist, wobei die Differenz zwischen den Ebenen der beiden Sensorknoten (a,...,i) eine Information wenigstens über die Güte der Kommunikation zwischen diesen Sensorknoten (a,...,i) darstellt.

9. Verfahren nach einem der vorherigen Ansprüche, **dadurch gekennzeichnet, dass** als eine Eigenschaft der Kommunikation die Güte und/oder die Signalstärke und/oder das Signal-Rauschverhältnis und/oder die Belastung durch Kommunikation mit anderen Sensorknoten (a,...,i) gewählt wird.

10. Verfahren nach einem der vorherigen Ansprüche, **dadurch gekennzeichnet, dass** eine Durchführung einer Änderung der hierarchischen Ebene (4000, 4100, 4200,....) unmittelbar erfolgt, wenn ein Sensorknoten (a,...,i) bei Empfang eines Synchronisationstelegrammes eines anderen Sensorknotens (a,...,i) oder des zentralen Netzknotens (s) durch Vergleich seiner Ebene mit der empfangenen Ebene feststellt, dass die eigene Ebene um mehr als "Eins" größer ist als die Ebene des anderen Knotens.

11. Verfahren nach einem der vorherigen Ansprüche, **dadurch gekennzeichnet, dass** ein Sensorknoten (a,...,i), der durch Empfang eines Synchronisationstelegrammes eines anderen Sensorknotens (a,...,i) durch Vergleich der Ebenen (4000, 4100, 4200,....) feststellt, dass seine Ebene um mehr als "Eins" kleiner ist als die Ebene des anderen Sensorknotens (a,...,i) an den anderen Sensorknoten (a,...,i) eine Aufforderung sendet, seine Ebene zu ändern, insbesondere wobei die Aussendung der Aufforderung gemäß einer vorgegebenen / vorgebbaren Wahrscheinlichkeit erfolgt, insbesondere mit einer Wahrscheinlichkeit von 20 bis 60%.

12. Verfahren nach einem der vorherigen Ansprüche, **dadurch gekennzeichnet, dass** ein temporärer zentraler Netzknoten als Sensorknoten (a,...,i) installiert und ein neuer temporärer oder endgültiger zentraler Netzknoten gebildet, insbesondere hinzugefügt wird.

13. Verfahren nach einem der vorherigen Ansprüche, **dadurch gekennzeichnet, dass** die Konvergenz des Netzes geprüft wird durch Abfrage der hierarchischen Ebenen (4000, 4100, 4200,....) der Sensorknoten (a,...,i), insbesondere mittels eines mobilen Installationsgerätes, wobei auf eine Konvergenz geschlossen wird, wenn jeder abgefragte Sensorknoten (a,...,i) eine hierarchische Ebene (4000, 4100, 4200,....) aufweist, die niedriger ist als die minimale anfängliche hierarchische Ebene (4000, 4100, 4200,....) aller Sensorknoten (a,...,i).

14. Verfahren nach einem der vorherigen Ansprüche, **dadurch gekennzeichnet, dass** eine direkte oder indirekte Verbindung eines Sensorknotens (a,...,i) zum zumindest temporären zentralen Netzknoten geprüft wird durch Abfrage der hierarchischen Ebene (4000, 4100, 4200,....) des Sensorknotens (a,...,i), wobei auf eine Verbindung geschlossen wird, wenn der abgefragte Sensorknoten (a,...,i) eine hierarchische Ebene (4000, 4100, 4200,....) aufweist, die kleiner oder gleich der maximalen Anzahl der Sensorknoten (a,...,i) ist.

## Claims

1. Method for installing a hierarchical network comprising a plurality of sensor nodes (a,..., i) which communicate sensor measurement values directly or indirectly via sensor nodes to a central network node (s), wherein sensor nodes a,...,i) are put into operation one after the other,
a. wherein, on being put into operation, a sensor node (a,...,i) has an initial hierarchical level (4000, 4100, 4200,...), more particularly, is assigned to this level (4000, 4100, 4200,...) and,
b. wherein, on being put into operation, a sensor node (a,...,i) has stored synchronisation information, in order to be able to communicate with at least some, more particularly, with all the sensor nodes (a,...,i) situated in the reception range thereof and, more particularly, with sensor nodes (a,...,i) which were previously put into operation,
c. wherein at least one sensor node (a,...,i) at least temporarily consists of a central network node, in particular that/those with the lowest hierarchical level,
d. wherein, during communication between two sensor nodes (a,...,i) or one sensor node (a,...,i) and one central network node (s), a synchronisation telegram is transmitted, by means of which the hierarchical level (4000, 4100, 4200,...) of the transmitting node (a,..., i) is communicated to the receiving node (a,...,i),
**characterised in that**
during or following a communication, one of the sensor nodes (a,...,i) changes the hierarchical level (4000, 4100, 4200,...) thereof depending on the hierarchical level (4000, 4100, 4200,...) of the other sensor node (a,...,i) wherein the performance of the change is at least dependent on a property of the communication.

2. Method according to claim 1, **characterised in that** an initial hierarchical level (4000, 4100, 4200,...) is different for each sensor node (a,..., i) which is put into operation.

3. Method according to claim 2, **characterised in that** an initial hierarchical level (4000, 4100, 4200,...) of a sensor node (a,...,i) with the exception of the central network node (s), is chosen larger than the maximum number of sensor nodes (a,...,i) to be installed.

4. Method according to one of the preceding claims, **characterised in that** the initial hierarchical level (4000, 4100, 4200,...) and/or the synchronisation information is/are transmitted from a mobile installation device to a sensor node (a,..., i).

5. Method according to claim 4, **characterised in that** the synchronisation information relating to a selection of all the possible previously installed nodes (a,...,i) is transmitted by means of a mobile installation device to a newly installed sensor node (a,...,i), more particularly, wherein the selection comprises at least partially information relating to those sensor nodes (a,...,i) which have not yet been able to establish communication with other sensor nodes (a,...,i).

6. Method according to one of the preceding claims, **characterised in that** the synchronisation information is learned by a sensor node (a,...,i) **in that** a sensor node (a,...,i) which has newly been put into operation opens the receive window thereof for the duration of at least one period of the transmitted synchronisation telegrams of other sensor nodes (a,...,i).

7. Method according to one of the preceding claims, **characterised in that** when the hierarchical level (4000, 4100, 4200,...) of a sensor node (a,..., i) is changed, the changing level is chosen so that said level has a separation of "one" from the level of the other sensor node (a,...,i), more particularly, that it is larger by one level.

8. Method according to one of the preceding claims, **characterised in that** when the hierarchical level (4000, 4100, 4200,...) of a sensor node (a,..., i) is changed, the changing level is chosen so that said level has a separation from the level of the other sensor node (a,...,i) of greater than "one", wherein the difference between the levels of the two sensor nodes (a,...,i) represents information at least regarding the quality of the communication between said sensor nodes (a,...,i).

9. Method according to one of the preceding claims, **characterised in that** the quality and/or signal strength and/or the signal-to-noise ratio and/or the load from communication with other sensor nodes (a,...,i) is selected as a property of the communication.

10. Method according to one of the preceding claims, **characterised in that** a change in the hierarchical level (4000, 4100, 4200,...) takes place immediately if a sensor node (a,...,i) determines, on receiving a synchronisation telegram from another sensor node (a,...,i) or from the central network node (s), by comparing the level of the receiving network node with the received level, that the level of the receiving sensor node is larger than the level of the other node by more than "one".

11. Method according to one of the preceding claims, **characterised in that** a sensor node (a,...,i) which determines, by receiving a synchronisation telegram from another sensor node (a,...,i) and by comparing the levels (4000, 4100, 4200,...), that the level of the receiving sensor node is smaller than the level of the other sensor node (a,...,i) by more than "one", transmits a request to the other sensor node (a,...,i) to change the level of the other sensor node, more particularly, wherein the transmission of the request is performed according to a pre-set/presettable probability, more particularly, with a probability of between 20% and 60%.

12. Method according to one of the preceding claims, **characterised in that** a temporary central network node is installed as a sensor node (a,...,i) and a new temporary or final central network node is formed, more particularly, added.

13. Method according to one of the preceding claims, **characterised in that** the convergence of the network is tested by enquiring as to the hierarchical levels (4000, 4100, 4200,...) of the sensor nodes (a,..., i), more particularly, by means of a mobile installation device, wherein a convergence is concluded if each sensor node (a,..., i) to which an enquiry is made (a,..., i) has a hierarchical level (4000, 4100, 4200,...) that is lower than the minimum initial hierarchical level (4000, 4100, 4200,...) of all the sensor nodes (a,...,i).

14. Method according to one of the preceding claims, **characterised in that** a direct or indirect connection of one sensor node (a,...,i) to the at least temporary central network node is tested by enquiring as to the hierarchical level (4000, 4100, 4200,...) of the sensor node (a,...,i), wherein a connection is concluded if the sensor node (a,...,i) of which the enquiry is made has a hierarchical level (4000, 4100, 4200,...) that is smaller than or equal to the maximum number of sensor nodes (a,...,i).

## Revendications

1. Procédé d'installation d'un réseau hiérarchique avec plusieurs noeuds de détection (a,...,i), lesquels communiquent des valeurs de mesure de détection directement ou indirectement via les noeuds de détection à un noeud de réseau central (s), pour lequel les noeuds de détection (a,...,i) sont mis en service les uns après les autres,
a. un noeud de détection (a,...,i) comportant, lors de sa mise en service, un niveau hiérarchique de début (4000, 4100, 4200,...), ce niveau (4000, 4100, 4200,...) étant plus particulièrement affecté, et
b. un noeud de détection (a,...,i) ayant enregistré, lors de sa mise en service, des informations de synchronisation, afin de pouvoir communiquer au moins avec certains, et plus particulièrement avec tous les noeuds de détection (a,...,i) se trouvant dans une zone de réception et plus particulièrement mis en service au préalable,
c. au moins un noeud de détection (a,...,i) formant au moins temporairement un noeud de réseau central, plus particulièrement celui/ceux avec le niveau hiérarchique le plus faible,
d. un télégramme de synchronisation étant envoyé, lors d'une communication entre dieux noeuds de détection (a,...,i) ou un noeud de détection (a,...,i) et un noeud de réseau central (s), avec lequel le niveau hiérarchique (4000, 4100, 4200,...) du noeud envoyé (a,...,i) est partagé au niveau du noeud récepteur (a,...,i),
**caractérisé en ce que**
son niveau hiérarchique (4000, 4100, 4200,...) est modifié pendant ou après la communication avec un des noeuds de détection (a,...,i), en fonction du niveau hiérarchique (4000, 4100, 4200,...) de l'autre noeud de détection (a,...,i), la modification dépendant au moins d'une propriété de la communication.

2. Procédé selon la revendication 1, **caractérisé en ce qu'**un niveau hiérarchique de début (4000, 4100, 4200,...) est différent pour chaque noeud de détection (a,...,i) mis en service.

3. Procédé selon la revendication 2, **caractérisé en ce qu'**un niveau hiérarchique de début (4000, 4100, 4200,...) d'un noeud de détection (a,...,i), à l'exception du noeud de réseau central (s), est supérieur au nombre maximal des noeuds de détection (a,...,i) à installer.

4. Procédé selon l'une quelconque des revendications précédentes, **caractérisé en ce que** le niveau hiérarchique de début (4000, 4100, 4200,...) et/ou les informations de synchronisation est/sont transmis(es) à un noeud de détection (a,...,i) par un appareil d'installation mobile.

5. Procédé selon la revendication 4, **caractérisé en ce que** les informations de synchronisation sont transmises à un noeud de détection (a,..., i) nouvellement installé par un appareil d'installation mobile en fonction d'une sélection parmi tous les noeuds de détection (a,...,i) possibles déjà installés, la sélection comprenant au moins plus particulièrement une partie des informations vers de tels noeuds de détection (a,...,i), lesquels ne pourraient encore recevoir aucune communication avec d'autres noeuds de détection (a,...,i).

6. Procédé selon l'une quelconque des revendications précédentes, **caractérisé en ce que** les informations de synchronisation sont apprises par un noeud de détection (a,...,i), **en ce qu'**un noeud de détection (a,...,i) récemment mis en service ouvre sa fenêtre de réception pendant au moins la durée des télégrammes de synchronisation émis d'autres noeuds de détection (a,...,i).

7. Procédé selon l'une quelconque des revendications précédentes, **caractérisé en ce que**, lors de la modification du niveau hiérarchique (4000, 4100, 4200,...) d'un noeud de détection (a,...,i), le niveau qui est modifié est choisi, de sorte qu'il comporte un écart de « un » par rapport au niveau de l'autre noeud de détection (a,...,i), plus particulièrement **en ce qu'**il est supérieur d'un niveau.

8. Procédé selon l'une quelconque des revendications précédentes, **caractérisé en ce que**, lors d'une modification du niveau hiérarchique (4000, 4100, 4200,...) d'un noeud de détection (a,...,i), le niveau qui est modifié est choisi, de sorte qu'il comporte un écart supérieur à « un » par rapport au niveau de l'autre noeud de détection (a,...,i), la différence entre les niveaux des deux noeuds de détection (a,...,i) représentant une information indiquant au moins la bonne communication entre ces noeuds de détection (a,...,i).

9. Procédé selon l'une quelconque des revendications précédentes, **caractérisé en ce que** la qualité et/ou l'intensité du signal et/ou le rapport signal-bruit et/ou la charge de la communication avec d'autres noeuds de détection (a,...,i) sont sélectionnés comme propriété de la communication.

10. Procédé selon l'une quelconque des revendications précédentes, **caractérisé en ce qu'**une modification du niveau hiérarchique (4000, 4100, 4200,...) est effectuée directement lorsqu'un noeud de détection (a,...,i) détermine, lors de la réception d'un télégramme de synchronisation d'un autre noeud de détection (a,...,i) ou du noeud de réseau central (s), par comparaison de son niveau avec le niveau reçu, que le niveau propre est supérieur de plus de « un » au niveau de l'autre noeud.

11. Procédé selon l'une quelconque des revendications précédentes, **caractérisé en ce qu'**un noeud de détection (a,...,i), qui détermine, lors de la réception d'un télégramme de synchronisation d'un autre noeud de détection (a,...,i) par comparaison des niveaux (4000, 4100, 4200,...), que son niveau est inférieur de plus de « un » au niveau des autres noeuds de détection (a,...,i), envoie une demande aux autres noeuds de détection (a,...,i) pour modifier son niveau, plus particulièrement l'émission de la demande étant effectuée selon une probabilité prédéfinie/prédéfinissable, plus particulièrement avec une probabilité de 20 à 60%.

12. Procédé selon l'une quelconque des revendications précédentes, **caractérisé en ce qu'**un noeud de réseau central temporaire est installé comme noeud de détection (a,...,i) et un nouveau noeud de réseau central temporaire ou définitif est constitué, plus particulièrement ajouté.

13. Procédé selon l'une quelconque des revendications précédentes, **caractérisé en ce que** la convergence du réseau est vérifiée en interrogeant les niveaux hiérarchiques (4000, 4100, 4200,...) des noeuds de détection (a,...,i), plus particulièrement au moyen d'un appareil d'installation mobile, le circuit empêchant la convergence lorsque chaque noeud de détection demandé (a,...,i) comporte un niveau hiérarchique (4000, 4100, 4200,...) inférieur au niveau hiérarchique minimum de début (4000, 4100, 4200,...) de tous les noeuds de détection (a,...,i).

14. Procédé selon l'une quelconque des revendications précédentes, **caractérisé en ce qu'**une liaison directe ou indirecte d'un noeud de détection (a,...,i) vers au moins un noeud de réseau central temporaire est vérifiée en interrogeant le niveau hiérarchique (4000, 4100, 4200,...) du noeud de détection (a,...,i), le circuit empêchant la liaison lorsque le noeud de détection demandé (a,...,i) comporte un niveau hiérarchique (4000, 4100, 4200,...) inférieur ou équivalent au nombre maximum de noeuds de détection (a,...,i).
